# EUROPÄISCHE PATENTANMELDUNG

(11) **EP 1 106 886 A2**
(43) Veröffentlichungstag der Anmeldung: **13.06.2001**
(21) Anmeldenummer: 00124604.0
(22) Anmeldetag: 10.11.2000
(51) Int. Cl.: F16L 3/10

(54) **Vorrichtung zum Verbinden zweier Teile**

(30) Priorität: 02.12.1999 DE 19958104
(71) Anmelder: Johann Sauer Eisenwarenfabrik GmbH & Co. KG, 61389 Schmitten-Niederreifenberg (DE)
(72) Erfinder: Weichel, Rainer, Dipl.-Ing., 61184 Karben (DE)
(74) Vertreter: Knefel, Cordula, Dipl.-Phys.

(57) **Zusammenfassung**

Es wird eine Vorrichtung zum Verbinden zweier Teile beschrieben, bei der die Teile durch eine Schraube und ein ein Innengewinde aufweisendes Befestigungselement miteinander verspannbar sind, sowie eine Vorrichtung zum Verbinden zweier Teile, wobei ein Teil mit einem ein Innengewinde aufweisendes Befestigungselement an einem anderen Teil mittels eines Gewindebolzens befestigbar ist. Um eine verbesserte Montage- und Verstellmöglichkeit von Schraubverbindungen zu schaffen, ist vorgesehen, dass das Befestigungselement aus einer Gewindesegmentaufnahme mit einer sich in Richtung des Gewindeendes der Schraube erweiternden konusförmigen Aufnahme und wenigstens zwei Innengewindesegmenten mit einem Innengewinde besteht, und dass die Innengewindesegmente formschlüssig mit der Aufnahme der Gewindesegmentaufnahme in Eingriff bringbar sind. (Fig. 1).

## Beschreibung

Die Erfindung betrifft eine Vorrichtung zum Verbinden zweier Teile, wobei die Teile durch eine Schraube und ein ein Innengewinde aufweisendes Befestigungselement miteinander verspannbar sind oder wobei ein Teil mit einem ein Innengewinde aufweisendes Befestigungselement an einem anderen Teil mittels eines Gewindebolzens befestigbar ist.

Häufig sind lose Teile durch Schraubverbindungen miteinander zu verspannen. Dies erfolgt üblicherweise mit einer Schraube und einer Mutter, zwischen denen die beiden losen Teile angeordnet sind. Werden dabei lange Schrauben verwendet, sind häufig zahlreiche Schraubbewegungen durchzuführen, bis es zu dem eigentlichen Verspannvorgang kommt. Dadurch kann sich ein Montagevorgang als sehr zeitaufwendig erweisen.

Als Beispiel seien Rohrschellen erwähnt, mit denen Rohre oder dergleichen zum Beispiel an Wänden oder Decken befestigt werden. Diese Rohrschellen bestehen im Allgemeinen aus einem Ober- und einem Unterteil. Die beiden Rohrschellenteile werden durch ein Scharnier schwenkbar zusammengehalten, damit die Rohrschelle leicht über das zu befestigende Rohr geklappt werden kann. Auf der anderen Seite haben die beiden Rohrschellenteile einen abstehenden Flansch, wobei der eine Flansch ein Loch für eine durchzusteckende Schraube hat, während der andere Flansch mit einem Gewindeloch versehen ist, in das sich die Schraube zum Festschrauben eindrehen lässt.

Da dies sehr umständlich ist, ist in dem deutschen Gebrauchsmuster G 87 03 752.1 vorgeschlagen worden, die Schraube bereits vor dem Umlegen der Schelle um das Rohr in die Schraubenmutter einzudrehen. Ist die Schelle mit der vorher angedrehten Schraube um das Rohr gelegt, schiebt sich nach dem Zusammendrücken der beiden Rohrschellenteile die Schraube federnd über den als abgekröpfte Lasche ausgebildeten Flansch des anderen Rohrschellenteils und greift mit seinem Schraubenkopf in die an dem anderen Rohrschellenteil ausgebildete geschlitzte Lasche ein. Danach braucht die Schraube nur noch festgedreht zu werden. Hierbei'ist allerdings ein relativ großer Gewindeweg zu überbrücken, was die Montage der Rohrschelle damit zeitaufwendig macht.

Aufgabe der Erfindung ist es daher, eine Vorrichtung der eingangs genannten Art zu schaffen, die eine verbesserte Montage- und Verstellmöglichkeit von Schraubverbindungen und insbesondere eine schnellere Verstellung der beaufschlagten Komponenten ermöglicht.

Diese Aufgabe wird erfindungsgemäß dadurch gelöst, dass das Befestigungselement aus einer Gewindesegmentaufnahme mit einer sich in Richtung des Gewindeendes der Schraube erweiternden konusförmigen Aufnahme und wenigstens zwei Innengewindesegmenten mit einem Innengewinde besteht, dass die Innengewindesegmente formschlüssig mit der Aufnahme der Gewindesegmentaufnahme in Eingriff bringbar sind, und dass an einem der zu verspannenden Teile ein Gehäuse für die Gewindesegmentaufnahme mit den beiden Innengewindesegmenten angeordnet ist, oder dass das eine der zu verspannenden Teile, die Gewindesegmentaufnahme und die beiden Innengewindesegmente von einem Federelement umschlossen werden.

Die erfindungsgemäße Vorrichtung dient nicht nur zum schnellen Verspannen zweier Teile beispielsweise der beiden Hälften einer Rohrschelle. Die erfindungsgemäße Vorrichtung kann auch vorteilhaft zum Befestigen einer Rohrschelle an einem anderen Teil oder an einer Wand eingesetzt werden. Hierzu ist an der Rohrschelle gemäß dem Stand der Technik eine Mutter angeschweißt. Gemäß der Erfindung ist anstelle der Mutter das erfindungsgemäße Befestigungselement mit einem Gehäuse mit einem Innenkonus vorgesehen. In dem Gehäuse sind wenigstens zwei Innengewindesegmente mit einem Innengewinde angeordnet, wobei die Innengewindesegmente einen Außenkonus aufweisen.

Bei dem erfindungsgemäßen Befestigungselement sind im Betätigungsfall die Innengewindesegmente verschiebbar. Hierdurch kann der Gewindeeingriff vorübergehend aufgehoben werden. In dieser Situation ist eine axiale Bewegung der Schraube ohne Drehung zum Innengewinde durchführbar. Die erfindungsgemäße Vorrichtung stellt eine form- und kraftschlüssige Gewindeverbindung zur Aufnahme sämtlicher Kräfte der Schraubverbindung dar.

Durch einen axialen Druck auf den Schraubenkopf werden die Innengewindesegmente bei der Ausführungsform mit dem Gehäuse in Richtung des erweiterten Gehäuseteiles verschoben. Da das Gewinde der Schraube bei dieser Ausführungsform immer an einer Stelle mit dem Innengewinde der Gewindesegmente in Eingriff steht, braucht die Schraube anschließend nur mit wenigen Umdrehungen in gewohnter Weise festgeschraubt zu werden, damit sich die Gewindesegmente in den Bereich der konusförmigen Verjüngung des Gehäuses ziehen.

Durch einen axialen Druck auf den Schraubenkopf werden die zu verspannenden Teile bei der Ausführungsform mit dem Federelement zunächst in eine Vorspannlage gebracht. Danach braucht ebenfalls die Schraube nur noch mit wenigen Umdrehungen in gewohnter Weise festgeschraubt zu werden.

Die Montage wird damit erheblich vereinfacht und lässt sich schneller durchführen.

Bei der Ausführungsform, bei der die Rohrschelle an einem anderen Teil, welches einen Gewindebolzen oder eine Stockschraube aufweist, befestigt wird, wird nach dem gleichen Prinzip der Gewindeeingriff vorübergehend aufgehoben. In dieser Situation kann der Gewindebolzen oder die Stockschraube axial ohne Drehung zum Innengewinde bewegt werden. Anschließend wird die Rohrschelle gedreht, wodurch der Gewindebolzen oder die Stockschraube mit dem Innengewinde der Innengewindesegmente in Eingriff kommt. Die Rohrschelle kann anschließend durch Drehen an dem anderen Teil oder an der Wand, in der der Gewindebolzen oder die Stockschraube befestigt ist, befestigt werden.

Gemäß einer bevorzugten Ausführungsform der Erfindung sind zwei halbmondförmige Innengewindesegmente vorgesehen. Diese lassen sich einfach herstellen, montieren und handhaben. Erfindungsgemäß können aber auch mehr als zwei Innengewindesegmente vorgesehen sein.

Damit die Innengewindesegmente zum freien Bewegen des Befestigungselementes auf der Schraube außer Eingriff mit dem Gewinde der Schraube gelangen können, ist erfindungsgemäß vorgesehen, dass die Innengewindesegmente in der Gewindesegmentaufnahme verschiebbar angeordnet sind.

Diese Verschiebung wird in Weiterbildung dieses Erfindungsgedankens dadurch erleichtert, dass die Innengewindesegmente außen kegelig ausgebildet sind. Da die Gewindesegmentaufnahme innen konusförmig und die Innengewindesegmente außen kegelig ausgebildet sind, können letztere formschlüssig in einer entsprechenden Aufnahme in der Gewindesegmentaufnahme aufgenommen werden.

Um den Bewegungsweg der Innengewindesegmente innerhalb der Gewindesegmentaufnahme zu begrenzen, ist in deren konusförmigen Aufnahme ein Absatz oder Anschlag ausgebildet.

Gemäß einer besonders bevorzugten Ausgestaltung der Erfindung weist das eine zu verspannende Teil ein Gehäuse auf, in dem die wenigstens zwei Gewindeeinsätze, die halbmondförmig ausgebildet sind, angeordnet sind. Die Gewindeeinsätze weisen einen Außenkonus auf, der formschlüssig in einem Innenkonus des Gehäuses angeordnet werden kann.

Die wenigstens zwei Gewindeeinsätze weisen vorteilhaft außerhalb des konusförmigen Bereiches an ihrer Außenseite eine Ringnut auf, in der ein Sicherungsring angeordnet ist. Durch den Sicherungsring ist gewährleistet, dass die wenigstens zwei Gewindeeinsätze in dem Gehäuse in jeweils gleicher Höhe angeordnet sind, um zuverlässig ein Innengewinde zu bilden.

Vorteilhaft ist zusätzlich wenigstens ein Sicherungsstift vorgesehen, der durch das Gehäuse in den wenigstens einen Schlitz, der zwischen den wenigstens zwei Gewindeeinsätzen ausgebildet wird, greift. Hierdurch ist gewährleistet, dass sich die Gewindeeinsätze beim Eindrehen der Schraube nicht mitdrehen. Es besteht die Möglichkeit, dass ein Sicherungsstift vorgesehen ist, der durch das gesamte Gehäuse greift und damit durch zwei Schlitze, die zwischen zwei Gewindeeinsätzen gebildet werden. Es besteht auch die Möglichkeit, dass zwei Stifte vorgesehen sind, die jeweils nur im Bereich der Gewindeeinsätze angeordnet sind und nicht bis in den Gewindebereich der Gewindeeinsätze greifen.

Es ist auch möglich, den Sicherungsstift durch eine Bohrung eines Gewindeeinsatzes zu führen.

Beim Einschieben der Schraube werden die wenigstens zwei Gewindeeinsätze in den erweiterten, das heißt in den sich nicht konisch verjüngenden Bereich des Gehäuses verschoben. Die Schraube steht nach dem Einschieben mit ihrem Außengewinde üblicherweise an irgendeiner Stelle im Eingriff mit dem Innengewinde des wenigstens einen Gewindeeinsatzes.

Wird die Schraube in Drehbewegung gesetzt, greift das Außengewinde der Schraube in das Innengewinde des Gewindeeinsatzes. Der Gewindeeinsatz bewegt sich in Richtung der sich konisch verjüngenden Innenwand des Gehäuses. Durch den Außenkonus des Gewindeeinsatzes und den Innenkonus des Gehäuses zieht sich der mehrteilige Gewindeeinsatz zusammen, und die Schraube kann fest eingedreht werden.

In einer weiteren Ausgestaltung der Erfindung ist in dem Gehäuse eine Feder oder ein elastischer Ring oder dergleichen angeordnet, um den Gewindeeinsatz im Bereich des Innenkonus des Gehäuses zu halten. Beim Einschieben der Schraube wird die Federkraft überwunden. Sobald die Schraube eingeschoben ist, wird der Gewindeeinsatz wieder in Richtung des Innenkonus des Gehäuses mittels der Federkraft gedrückt, und der Schraubvorgang kann ganz normal vorgenommen werden.

Gemäß einer weiteren Ausgestaltung der Erfindung ist vorgesehen, dass die Innengewindesegmente durch Aufbringung eines axialen Druckes auf den Schraubenkopf gegen die Kraft des das Befestigungselement umgebenden Federelements außer Eingriff mit dem Innenkonus der Gewindesegmentaufnahme und dem Schraubengewinde bringbar ist. Das ermöglicht eine axiale Bewegung der Schraube entlang des als Mutter dienenden Befestigungselementes.

Um das eine der beiden zu verspannenden Teile, die Gewindesegmentaufnahme und die Innengewindesegmente einfach aber sicher zusammenhalten zu können, ist vorteilhaft vorgesehen, dass das Federelement als rechteckförmige Klammer ausgebildet ist.

In Weiterbildung dieses Erfindungsgedankens ist vorgesehen, dass in dem dem Schraubenkopf zugewandten Klammerabschnitt des Federelementes eine Durchtrittsöffnung für die Schraube ausgebildet ist, und dass die gegenüberliegenden schenkelförmigen Klammerenden bis nahe an den Schraubenschaft heranreichen. Damit lässt sich das Befestigungselement sicher an dem Schraubenschaft entlangbewegen, und die Innengewindesegmente können gegen die Rückstellkraft der Klammerenden so weit nach außen bewegt werden, dass sie außer Eingriff mit dem Schraubengewinde gelangen, wodurch das Befestigungselement entlang des Schraubenschaftes außer Eingriff mit dem Schraubengewinde verschoben werden kann.

Damit die beiden losen Teile sicher miteinander verbunden werden können, ist erfindungsgemäß das andere der zu verspannenden Teile zwischen dem Schraubenkopf und dem Befestigungselement frei beweglich auf dem Schraubenschaft angeordnet.

Um die Anzahl der Einzelteile des erfindungswesentlichen Befestigungselementes möglichst klein zu halten, kann das in dem Federelement angeordnete zu verspannende Teil erfindungsgemäß einteilig mit der Gewindesegmentaufnahme ausgebildet sein. Gemäß einer weiteren Ausgestaltung der Erfindung können auch das Federelement und die Innengewindesegmente als ein Teil ausgeführt sein.

Sollte statt einer federelastischen Klammer eine starre Klammer verwendet werden, kann in Weiterbildung des Erfindungsgedankens zwischen den Innengewindesegmenten und den Schenkeln der Klammer ein federelastisches Element, insbesondere ein Gummiring, angeordnet sein. Dieses sorgt dafür, dass die Innengewindesegmente nach Beendigung der Verschiebebewegung der Schraubs wieder zuruck in Eingriff

mit dem Innenkonus der Gewindesegmentaufnahme und dem Schraubengewinde gelangen.

Weitere Merkmale, Vorteile und Anwendungsmöglichkeiten der Erfindung ergeben sich aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Auf der Zeichnung ist ein Ausführungsbeispiel der Erfindung dargestellt, und zwar zeigen:
- Fig. 1: in teilweise geschnittener Darstellung eine Vorderansicht einer erfindungsgemäßen Vorrichtung mit Federelement zum Verbinden zweier Teile;
- Fig. 2: die in Fig. 1 dargestellte Vorrichtung in ihrer Ausgangslage vor einem Verbindungsvorgang;
- Fig. 3: die in Fig. 1 dargestellte Vorrichtung während des Verbindungsvorganges;
- Fig. 4: die in Fig. 1 dargestellte Vorrichtung in ihrer verspannten Endlage;
- Fig. 5: eine Rohrschelle mit vorher angedrehter Schraube mit einer erfindungsgemäßen Vorrichtung zum Verbinden zweier Teile (hier Laschen) in einer Ansicht von oben;
- Fig. 6: eine Ansicht von links auf die in Fig. 5 dargestellte Rohrschelle;
- Fig. 7: einen Längsschnitt durch ein geändertes Ausführungsbeispiel mit Gehäuse;
- Fig. 8: das Ausführungsbeispiel gemäß Fig. 7 vor dem Einschieben der Schraube;
- Fig. 9: das Ausführungsbeispiel gemäß Fig. 7 nach dem Einschieben der Schraube;
- Fig. 10: das Ausführungsbeispiel gemäß Fig. 7 nach dem Festdrehen der Schraube;
- Fig. 11: eine Steckmuffe im Schnitt;
- Fig. 12: die Steckmuffe nach Fig. 11 vor dem Aufschrauben auf einen Gewindebolzen;
- Fig. 13: die Steckmuffe nach Fig. 11 mit eingestecktem Gewindebolzen;
- Fig. 14: die Steckmuffe nach Fig. 11 mit eingeschraubtem Gewindebolzen.

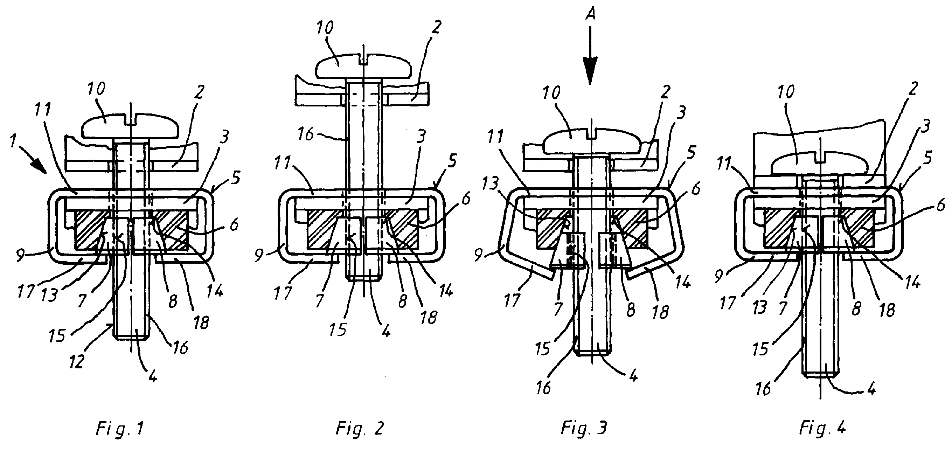

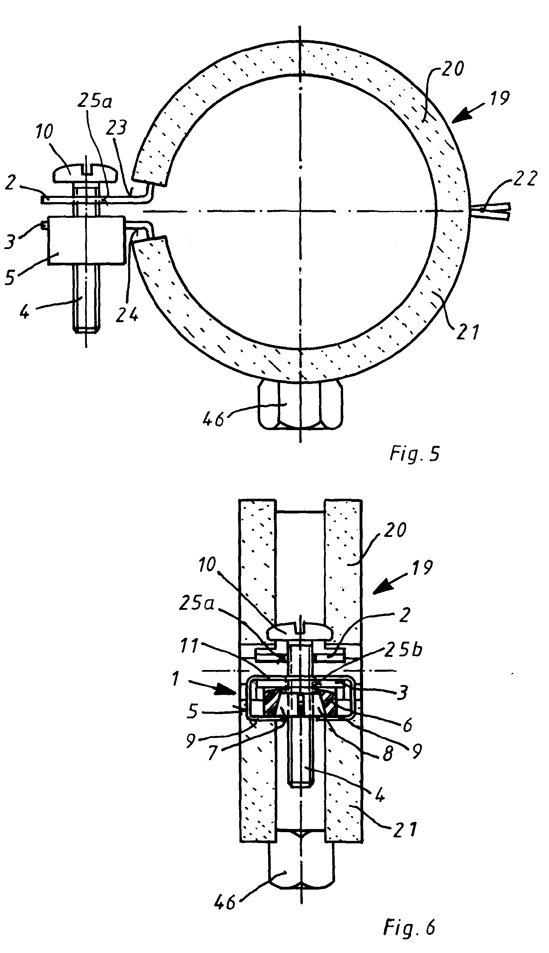

Die in Fig. 1 dargestellte Vorrichtung (1) dient zum schnellen Verspannen zweier Teile (2, 3) beispielsweise zweier Laschen, wie sie beispielsweise bei einer in den Fig. 5 und 6 dargestellten Rohrschelle verwendet werden.

Die Vorrichtung (1) besteht aus einer Schraube (4), den zu verspannenden Teilen (2, 3) und einem als Verstellund Schraubelement dienenden Befestigungselement (5). Das Befestigungselement (5) weist auf der Seite des Gewindeendes der Schraube (4) zwei in einer Gewindesegmentaufnahme (6) ruhende, halbmondförmige Innengewindesegmente (7, 8) auf. Das eine zu verspannende Teil (3), die Gewindesegmentaufnahme (6) und die Innengewindesegmente (7, 8) werden außen von einem als rechteckförmige Klammer ausgebildeten Federelement (9) in Position gehalten. Das zu verspannende Teil (3) liegt von innen an dem dem Schraubenkopf (10) zugewandten Klammerabschnitt (11) des Federelementes (9) an. Unterhalb des Teils (3) ist die runde Gewindesegmentaufnahme (6) angeordnet. Diese weist eine sich zum Gewindeende (12) der Schraube hin konusförmig erweiternde Aufnahme (13) auf.

Die Aufnahme (13) ist so ausgebildet, dass sie die au-ßen kegelig ausgebildeten Innengewindesegmente (7, 8) formschlüssig aufnehmen kann. Begrenzt wird die Aufnahme (13) in der Tiefe durch einen Absatz (14).

Die Innengewindesegmente (7, 8) weisen ein Innengewinde (15) auf und dienen zusammen mit der Gewindesegmentaufnahme (6) als Mutter für die Schraube (4). Im eingeschraubten Zustand werden die Innengewindesegmente (7, 8) form- und kraftschlüssig in der Aufnahme (13) der Gewindesegmentaufnahme (6) gehalten. Damit die Innengewindesegmente (7, 8) bei einem Lösen dieser Verbindung nicht aus dem Befestigungselement (5) herausfallen, werden sie von den freien Schenkeln (17, 18) der federelastischen Klammer (9) in der Aufnahme (13) gehalten. Die Enden der Schenkel (17, 18) des Federelementes (9) ragen bis nahe an das Schraubengewinde (16) der Schraube (4).

In den Fig. 2 bis 4 ist die Funktionsweise der Vorrichtung (1) zum Verbinden zweier Teile (2, 3) veranschaulicht. Fig. 2 zeigt dabei den Ausgangszustand vor Beginn eines Verbindungsvorganges. Dabei sind die Teile (2, 3) noch weit voneinander entfernt auf dem Schaft der Schraube (4) angeordnet. Um die beiden Teile (2, 3) miteinander zu verspannen, ist die Schraube (4) vollständig in das Befestigungselement (5) einzuschrauben. Damit jedoch nicht der gesamte Weg entlang des Schraubenschaftes durch Schrauben zurückgelegt zu werden braucht, lässt sich, wie in der Fig. 3 veranschaulicht, das Teil (2) bei aufgehobenem Gewindeeingriff schnell in eine Vorspannlage bringen. Dazu wird auf den Schraubenkopf (10) in Richtung des Pfeiles (A) ein Druck aufgebracht, worauf die beiden Innengewindesegmente (7, 8) die konusförmige Aufnahme (13) der Gewindesegmentaufnahme (6) verlassen und koaxial nach außen dem Schraubengewinde (16) ausweichen. Dabei werden sie von der Klammer (9) daran gehindert, aus der Gewindesegmentaufnahme (6) herauszufallen.

Sobald das Teil (2) an dem Klammerabschnitt (11) der federelastischen Klammer (9) zur Anlage kommt, kann die Schraube (4) nicht weiter in das Befestigungselement (5) geschoben werden, so dass auch keine nach außen gerichtete Kraft mehr auf die Innengewindesegmente (7, 8) ausgeübt wird. Die Innengewindesegmente (7, 8) werden durch die Rückstellkraft der Schenkel (17, 18) des klammerförmigen Federelementes (9) in die Aufnahme (13) der Gewindesegmentaufnahme (6) zurückgedrückt, wodurch das Innengewinde (15) der Innengewindesegmente (7, 8) erneut mit dem Schraubengewinde (16) der Schraube (4) in Eingriff gelangt. Nun kann die Schraube (4) festgeschraubt werden, wodurch die Innengewindesegmente (7, 8) wieder bis zum Absatz (14) in der konusförmigen Aufnahme (13) in die Gewindesegmentaufnahme (6) gezogen werden. Diese Endstellung ist in Fig. 4 dargestellt. In dieser können die Innengewindesegmente (7, 8) nicht mehr koaxial ausweichen, so dass hohe Anzugsmomente aufgebracht werden können.

Gemäß einer nicht dargestellten Ausführungsform können die Schenkel (17, 18) der Klammer (9) auch unbeweglich sein, wenn zwischen den Innengewindesegmenten (7, 8) und den Schenkeln (17, 18) ein federelastisches Element angeordnet ist. Dieses kann beispielsweise aus Gummi bestehen. Erfolgt bei dieser Ausführungsform ein Druck auf den Schraubenkopf (10), so folgen die Innengewindesegmente (7, 8) zunächst wieder der Schraubenbewegung. Dabei verlassen sie wieder den Innenkonus der Gewindesegmentaufnahme (6) und weichen koaxial nach außen dem Schraubengewinde (16) aus. Dabei drücken sie das federelastische Element zusammen. Ist die Schraube (4) am Ende ihres freien Verschiebeweges angelangt, drückt das federelastische Element die Innengewindesegmente (7, 8) wieder in die Aufnahme (13) zurück, wo sie wieder in Eingriff mit dem Innenkonus der Gewindesegmentaufnahme (6) und dem Schraubengewinde (16) gelangen, so dass die Schraube (4) festgezogen und die Teile (2, 3) verspannt werden können.

Damit die Anzahl der Einzelteile des Befestigungselementes (5) möglichst klein gehalten werden kann, kann das innerhalb des klammerförmigen Federelementes (9) angeordnete zu verspannende Teil (3) einteilig mit der Gewindesegmentaufnahme (6) ausgebildet sein. Auch können das Federelement (9) und die Innengewindesegmente (7, 8) als ein Teil ausgeführt sein. Diese Ausbildungen sind insbesondere dann von Vorteil, wenn die Vorrichtung zum Verbinden zweier Teile von Bauelementen verwendet werden, die in großen Stückzahlen hergestellt werden. So können die zu verspannenden Teile Laschen einer Rohrschelle sein, die in den Fig. 5 und 6 dargestellt ist.

Die Rohrschelle (19) besteht aus einem oberen Rohrschellenbügel (20) und einem unteren Rohrschellenbügel (21). Diese werden von einem Scharniergelenk (22) schwenkbar zusammengehalten, damit die Rohrschelle (19) leicht über ein nicht dargestelltes, an einer Wand, einer Decke oder dergleichen zu befestigendes Rohr geklappt werden kann. Auf der gegenüberliegenden Seite weisen die beiden Rohrschellenbügel (20, 21) jeweils einen abstehenden Flansch (23, 24) auf, wobei der Flansch (23) als Lasche (2) mit einem Langloch (25a) ausgebildet ist und der andere Flansch (24) eine Lasche mit einem Loch (25b) für eine durchzusteckende Schraube (4) ist.

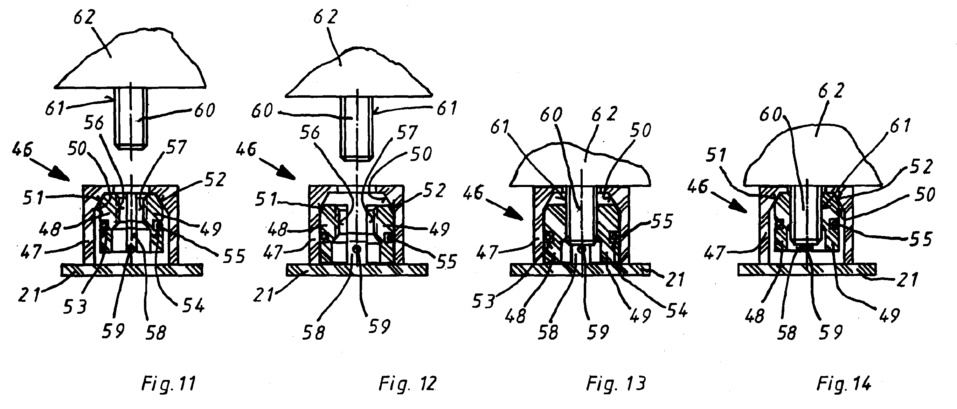

Die Rohrschelle (19) weist eine Muffe (46) auf. Mit der Muffe (46) wird die Rohrschelle (19) beispielsweise an einer Wand befestigt, wie in den Fig. 11 bis 14 noch erläutert wird.

Sind nun die Rohrschellenbügel (20, 21) um ein nicht dargestelltes Rohr gelegt und sollen die beiden Rohrschellenbügel miteinander verbunden werden, so schiebt sich nach dem Zusammendrücken der beiden Rohrschellenbügel (20, 21) der Schraubenkopf (10) der in der Lasche eingeschraubten Schraube (4) federnd über die Lasche (2) des anderen Rohrschellenbügels (20) und schnappt hinter dem in der Lasche (2) ausgebildeten Langloch (25a) ein und ist damit formschlüssig mit diesem verbunden. Um die beiden Laschen (2, 3) gegeneinander zu verspannen, ist die Schraube (4) festzudrehen. Hierfür ist ein relativ großer Gewindeweg zu überwinden, was ziemlich zeitaufwendig ist. Um dem Schraubenkopf (10) das Einschnappen in das Langloch (25) in der Lasche (2) zu erleichtern, kann die Lasche (2) abgekröpft sein (nicht dargestellt).

Da die Laschen (2, 3) der Flansche (23, 24) den zu verspannenden Teilen (2, 3) gemäß den Fig. 1 bis 4 entsprechen, lässt sich der Gewindeweg bei Verwendung des oben beschriebenen Befestigungselementes (5) leicht überbrücken. In den Fig. 5 und 6 sowie den Fig. 1 bis 4 sind gleiche Teile der Verbindungsvorrichtung mit gleichen Bezugszeichen versehen, die Laschen also mit (2, 3). Der Aufbau und die Funktionsweise des am Flansch (24) angeordneten Befestigungselementes (5) (Fig. 5) entspricht dem in den Fig. 1 bis 4 dargestellten und beschriebenen Befestigungselement (5), so dass sich eine detaillierte Darstellung in Fig. 5 erübrigt.

Da die Schraube (4) der Rohrschelle (19) bei Aufbringung eines axialen Druckes auf den Schraubenkopf (10) ohne Formschluss zum Innengewinde (15) der Innengewindesegmente (7, 8) in Richtung auf das Befestigungselement (5) so weit verschoben werden kann, bis die Laschen (2, 3) aneinander zur Anlage kommen, wird der Montagevorgang erheblich erleichtert.

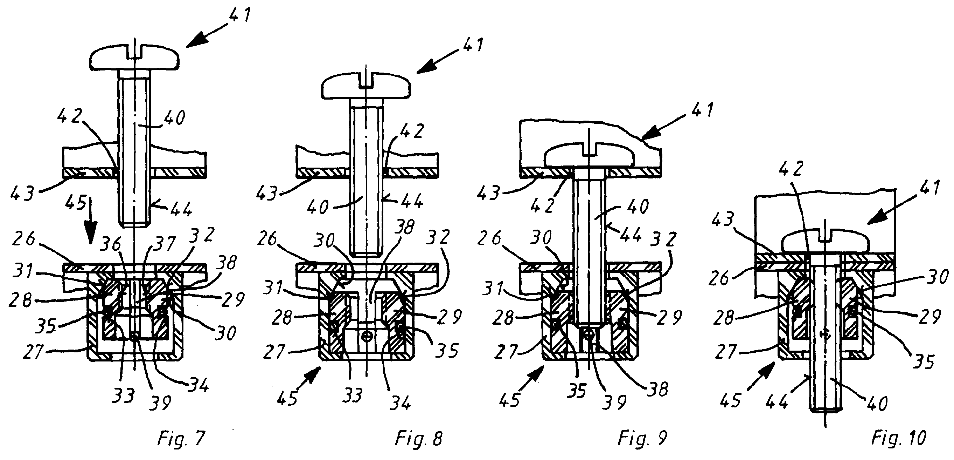

Fig. 7 zeigt zu verspannende Teile (26, 43) sowie eine Schraube (41). An dem zu verspannenden Teil (26) ist ein Gehäuse (27) angeordnet, in dem wiederum Gewindesegmente (28, 29) angeordnet sind. Das Gehäuse (27) weist einen Innenkonus (30) auf. Die Gewindesegmente (28, 29) weisen jeweils einen Außenkonus (31, 32) auf. In den Gewindesegmenten (28, 29) ist jeweils eine Ringnut (33, 34) vorgesehen, in der ein Sicherungsring (35) angeordnet ist. Der Sicherungsring (35) gewährleistet, dass die Gewindesegmente (28, 29) immer die gleichen Höhenpositionen aufweisen, so dass die Innengewindeteile (36, 37) der Gewindesegmente (28, 29) ein vollständiges Innengewinde bilden.

In einen Schlitz (38), der zwischen den Gewindesegmenten (28, 29) verbleibt, greift von beiden Seiten ein Sicherungsstift (39). Die Sicherungsstifte (39) dienen als Sicherung gegen ein Mitdrehen der Gewindesegmente (28, 29) und gewährleisten gleichzeitig, dass die Gewindesegmente (28, 29) einen gewissen Abstand voneinander behalten, um das Innengewinde entsprechend auszubilden. Die Sicherungsstifte können auch durch eingesickte Laschen vom Teil (27) ersetzt werden.

Gemäß Fig. 8 liegen die Gewindesegmente (28, 29) an dem unteren Kragen des Gehäuses (27) an. Ein Schaft (40) der Schraube (41) wird in das Gehäuse (27) eingeschoben. Die Schraube (41) greift durch eine Bohrung (42) des weiteren zu verspannenden Teiles (43).

Gemäß Fig. 9 ist die Schraube (41) mit ihrem Schaft (40) in das Gehäuse (27) eingeschoben. Ein Außengewinde (44) der Schraube (41) steht locker im Eingriff mit dem Innengewinde (36, 37) der Gewindesegmente (28, 29).

Die Gewindesegmente (28, 29) liegen an dem unteren Kragen des Gehäuses (27) an und befinden sich damit im erweiterten Bereich des Gehäuses (27). Die Schraube (41) kann damit mit ihrem Schaft (40) zwischen die Gewindesegmente (28, 29) eingeschoben werden.

Gemäß Fig. 10 ist die Schraube (41) festgedreht. Die Gewindesegmente (28, 29) haben sich in den konusförmigen Bereich (30) des Gehäuses (27) gezogen. Der Außenkonus (31, 32) der Gewindesegmente (28, 29) liegt damit an dem Innenkonus (30) des Gehäuses (27) an. Die Schraube (41) steht mit ihrem Außengewinde (44) fest im Eingriff mit dem Innengewinde (36, 37) der Gewindesegmente (28, 29).

Fig. 11 zeigt eine Muffe (46), die als Steckmuffe ausgebildet ist. Die Muffe (46) weist ein Gehäuse (47) mit darin angeordneten Gewindesegmenten (48, 49) auf. Das Gehäuse (47) ist an dem Rohrschellenbügel (21) gemäß Fig. 5 befestigt. Das Gehäuse (47) weist einen Innenkonus (50) auf. Die Gewindesegmente (48, 49) weisen jeweils einen Au-βenkonus (51, 52) auf. In den Gewindesegmenten (48, 49) ist jeweils eine Ringnut (53, 54) vorgesehen, in der ein Sicherungsring (55) angeordnet ist. Der Sicherungering (55) gewährleistet, dass die Gewindesegmente (48, 49) immer die gleichen Höhenpositionen aufweisen, so dass die Innengewindeteile (56, 57) der Gewindesegmente (48, 49) ein vollständiges Innengewinde bilden. In einen Schlitz (58), der zwischen den Gewindesegmenten (48, 49) verbleibt, greift ein Sicherungsstift (59). Der Sicherungsstift (59) dient als Sicherung gegen ein Mitdrehen der Gewindesegmente (48, 49) und gewährleistet gleichzeitig, dass die Gewindesegmente (48, 49) einen gewissen Abstand voneinander behalten, um das Innengewinde entsprechend auszubilden.

Gemäß Fig. 12 wird die Muffe (46) auf einen Gewindebolzen (60), der in einer Wand (62) angeordnet ist, befestigt.

Die Gewindesegmente (48, 49) liegen an dem unteren Kragen des Gehäuses (47) an. Der Gewindebolzen (60) wird in das Gehäuse (47) eingeschoben.

Gemäß Fig. 13 ist der Gewindebolzen (60) mit seinem Schaft in das Gehäuse (47) eingeschoben. Ein Außengewinde (61) des Gewindebolzens (60) steht locker im Eingriff mit dem Innengewinde (56, 57) der Gewindesegmente (48, 49).

Die Gewindesegmente (48, 49) liegen an dem unteren Kragen des Gehäuses (47) an und befinden sich damit im erweiterten Bereich des Gehäuses (47). Der Gewindebolzen (60) kann damit mit seinem Außengewinde (61) zwischen die Gewindesegmente (48, 49) eingeschoben werden.

Gemäß Fig. 14 ist der Gewindebolzen (60) festgedreht. Dies erfolgt dadurch, dass die Rohrschelle auf den Gewindebolzen (60) geschraubt wird, da der Gewindebolzen (60) fest in der Wand (62) verankert ist. Die Gewindesegmente (48, 49) haben sich in den konusförmigen Bereich (50) des Gehäuses (47) gezogen. Der Außenkonus (51, 52) der Gewindesegmente (48, 49) liegt damit an dem Innenkonus (50) des Gehäuses (47) an. Der Gewindebolzen (60) steht mit seinem Außengewinde (61) fest im Eingriff mit dem Innengewinde (56, 57) der Gewindesegmente (48,49).

### Bezugszeichen

- 1: Vorrichtung
- 2: zu verspannendes Teil
- 3: zu verspannendes Teil
- 4: Schraube
- 5: Befestigungselement
- 6: Gewindesegmentaufnahme
- 7: Innengewindesegment
- 8: Innengewindesegment
- 9: Federelement
- 10: Schraubenkopf
- 11: Klammerabschnitt
- 12: Gewindeende von (4)
- 13: Aufnahme in (6)
- 14: Absatz
- 15: Innengewinde
- 16: Schraubengewinde
- 17: Schenkel
- 18: Schenkel
- 19: Rohrschelle
- 20: Rohrschellenbügel
- 21: Rohrschellenbügel
- 22: Scharniergelenk
- 23: Flansch
- 24: Flansch
- 25a: Langloch
- 25b: Loch
- 26: zu verspannendes Teil
- 27: Gehäuse
- 28: Gewindesegment
- 29: Gewindesegment
- 30: Innenkonus des Gehäuses
- 31: Außenkonus des Gewindesegmentes (28)
- 32: Außenkonus des Gewindesegmentes (29)
- 33: Ringnut
- 34: Ringnut
- 35: Sicherungsring
- 36: Innengewinde des Gewindesegmentes (28)
- 37: Innengewinde des Gewindesegmentes (29)
- 38: Schlitz
- 39: Sicherungsstift
- 40: Schaft
- 41: Schraube
- 42: Schlitz
- 43: zu verspannendes Teil
- 44: Außengewinde der Schraube (41)
- 45: Befestigungselement
- 46: Steckmuffe
- 47: Gehäuse
- 48: Gewindesegment
- 49: Gewindesegment
- 50: Innenkonus des Gehäuses
- 51: Außenkonus des Gewindesegmentes (48)
- 52: Außenkonus des Gewindesegmentes (49)
- 53: Ringnut
- 54: Ringnut
- 55: Sicherungsring
- 56: Innengewinde des Gewindesegmentes (48)
- 57: Innengewinde des Gewindesegmentes (49)
- 58: Schlitz
- 59: Sicherungsstift
- 60: Gewindebolzen
- 61: Außengewinde des Gewindebolzens (60)
- 62: Wand
- A: Pfeil

## Patentansprüche

1. Vorrichtung zum Verbinden zweier Teile, wobei die Teile durch eine Schraube und ein ein Innengewinde aufweisendes Befestigungselement miteinander verspannbar sind, oder wobei ein Teil mit einem ein Innengewinde aufweisendes Befestigungselement an einem anderen Teil mittels eines ein Außengewinde aufweisendes Befestigungselementes befestigbar ist,
**dadurch gekennzeichnet,** dass das Befestigungselement (5, 45, 46) aus einer Gewindesegmentaufnahme (6, 27, 47) mit einer sich in Richtung des Gewindeendes (12) der Schraube (4, 41) oder des Gewindebolzens (60) erweiternden konusförmigen Aufnahme (13, 30, 50) und wenigstens zwei Innengewindesegmenten (7, 8; 28, 29; 48, 49) mit einem Innengewinde (15; 36, 37; 56, 57) besteht, dass die Innengewindesegmente (7, 8; 28, 29; 48, 49) formschlüssig in der Aufnahme (13, 30, 50) der Gewindesegmentaufnahme (6, 27, 47) anordbar sind, und dass die Gewindesegmentaufnahme (6, 27, 47) an einem der zu verbindenden Teile (3, 26, 21) angeordnet ist.

2. Vorrichtung nach Anspruch 1, dadurch gekennzeichnet, dass ein Gehäuse (27, 47) vorgesehen ist, in dem die wenigstens zwei Innengewindesegmente (28, 29; 48, 49) angeordnet sind.

3. Vorrichtung nach Anspruch 1, dadurch gekennzeichnet, dass die Gewindesegmentaufnahme (6) und die wenigstens zwei Innengewindesegmente (7, 8) von einem Federelement (9) umschlossen werden.

4. Vorrichtung nach Anspruch 1, dadurch gekennzeichnet, dass zwei halbmondförmige Innengewindesegmente (7, 8; 28, 29; 48, 49) vorgesehen sind.

5. Vorrichtung nach Anspruch 1, dadurch gekennzeichnet, dass die Innengewindesegmente (7, 8; 28, 29; 48, 49) in der Gewindesegmentaufnahme (6, 27, 47) verschiebbar angeordnet sind.

6. Vorrichtung nach Anspruch 1, dadurch gekennzeichnet, dass die Innengewindesegmente (7, 8; 28, 29; 48, 49) außen teilweise sich konisch verjüngend ausgebildet sind.

7. Vorrichtung nach Anspruch 3, dadurch gekennzeichnet, dass in der konusförmigen Aufnahme (13) der Gewindesegmentaufnahme (6) ein Absatz (14) ausgebildet ist.

8. Vorrichtung nach Anspruch 3, dadurch gekennzeichnet, dass die Innengewindesegmente (7) durch Aufbringung eines axialen Druckes auf den Schraubenkopf (10) der Schraube (4) gegen die Kraft des das Befestigungselement (5) umgebenden Federelementes (9) außer Eingriff mit dem Innenkonus der Gewindesegmentaufnahme (6) und dem Schraubengewinde (16) der Schraube (4) bringbar ist.

9. Vorrichtung nach Anspruch 3, dadurch gekennzeichnet, dass das Federelement (9) als rechteckförmige Klammer ausgebildet ist.

10. Vorrichtung nach Anspruch 9, dadurch gekennzeichnet, dass in dem dem Schraubenkopf (10) zugewandten Klammerabschnitt (11) des Federelementes (9) eine Durchtrittsöffnung für die Schraube (4) ausgebildet ist, und dass die gegenüberliegenden freien Schenkelenden (17, 18) des Federelementes (9) bis nahe an das Schraubengewinde (16) der Schraube (4) heranreichen.

11. Vorrichtung nach Anspruch 1, dadurch gekennzeichnet, dass das andere der zu verspannenden Teile (2) zwischen dem Schraubenkopf (10) und dem Befestigungselement (5) frei beweglich auf der Schraube (4) angeordnet ist.

12. Vorrichtung nach Anspruch 3, dadurch gekennzeichnet, dass das in dem Federelement (9) angeordnete zu verspannende Teil (3) einteilig mit der Gewindesegmentaufnahme (6) ausgebildet ist.

13. Vorrichtung nach Anspruch 3, dadurch gekennzeichnet, dass das Federelement (9) und die Innengewindesegmente (7, 8) einteilig ausgebildet sind.

14. Vorrichtung nach Anspruch 3, dadurch gekennzeichnet, dass zwischen den Innengewindesegmenten (7, 8) und den Schenkeln (17, 18) der Klammer (9) ein federelastisches Element, insbesondere ein Gummiring angeordnet ist.

15. Vorrichtung nach Anspruch 2, dadurch gekennzeichnet, dass das Gehäuse (27, 47) einen Innenkonus (20, 50) aufweist, in dem formschlüssig die Gewindesegmente (28, 29; 48, 49) mit einem Außenkonus (31, 32; 51, 52) anordbar sind.

16. Vorrichtung nach Anspruch 2, dadurch gekennzeichnet, dass die Gewindesegmente (28, 29; 48, 49) eine Ringnut (33, 34; 53, 54) aufweisen, in der ein Sicherungsring (35, 55) angeordnet ist.

17. Vorrichtung nach Anspruch 2, dadurch gekennzeichnet, dass ein Sicherungsstift (39, 59) vorgesehen ist.

18. Vorrichtung nach Anspruch 17, dadurch gekennzeichnet, dass der Sicherungsstift (39, 59) in einem Schlitz (38, 58) zwischen den wenigstens zwei Gewindesegmenten (28, 29; 48, 49) angeordnet ist.

19. Vorrichtung nach Anspruch 2, dadurch gekennzeichnet, dass das Gehäuse (27, 47) an dem zu verspannenden Teil (26) oder an dem zu verbindenden Teil (19) angeordnet ist.

20. Vorrichtung nach Anspruch 2, dadurch gekennzeichnet, dass auf der dem Außenkonus (31, 32; 51, 52) der Gewindesegmente (28, 29; 48, 49) gegenüberliegenden Seite der Gewindesegmente (28, 29; 48, 49) ein federelastisches Element angeordnet ist.

21. Vorrichtung nach Anspruch 2, dadurch gekennzeichnet, dass das Befestigungselement (5, 45, 46) an einer Rohrschelle (19) angeordnet ist.
